# EUROPEAN PATENT APPLICATION

(11) **EP 4 585 962 A1**
(43) Date of publication of application: **16.07.2025**
(21) Application number: 24208812.8
(22) Date of filing: 25.10.2024
(51) Int. Cl.: G01S 7/40

(54) **RADAR TARGET SIMULATOR, CORRESPONDING ANTENNA ARRAY AND RADAR TARGET SIMULATION METHOD**

(30) Priority: 11.01.2024 US 202418410483
(71) Applicant: Rohde & Schwarz GmbH & Co. KG, 81671 München (DE)
(72) Inventor: Bogner, Maximilian, 81673 Munich (DE); Neidhardt, Steffen, 84405 Dorfen (DE); Beer, Matthias, 85579 Neubiberg (DE)
(74) Representative: Rupp, Christian

(57) **Abstract**

A radar target simulator comprises a primary target generator configured to create at least a part of a radar scene, especially a radar scene, and/or at least one primary radar target, and a secondary target generator configured to create at least one secondary radar target. In this context, the secondary target generator comprises a receive path, a Doppler shifter, a delayer or a delay structure, and a transmit path.

## Description

### Technical Field

The disclosure relates to a radar target simulator, a corresponding antenna array, and a corresponding radar target simulation method. In particular, the disclosure relates to a radar target simulator comprising a primary target generator and a secondary target generator, an antenna array comprising a radar target generator, and a radar target simulation method comprising creating primary and secondary radar targets.

### Background Art

Generally, in times of an increasing number of applications employing radar systems such as advanced driver assistance systems or autonomous vehicles, there is a growing need of a radar target simulator, a corresponding antenna array, and a corresponding radar target simulation method for performing measurements with respect to such applications in order to verify their correct functioning in a particularly reliable, efficient, and economic manner.

Unfortunately, in the context of creating a particularly realistic environment for the corresponding radar under test or the corresponding radar sensor, respectively, common radar target simulation devices are not able to provide such a realistic environment or its corresponding creation is very expensive and costly.

### Summary

Thus, there is a need to provide a radar target simulator, a corresponding antenna array, and a corresponding radar target simulation method to perform measurements with respect to a radar under test in a particularly reliable, efficient, and economic manner.

This is achieved by the embodiments provided in the enclosed independent claims. Advantageous implementations of the present disclosure are further defined in the dependent claims.

According to a first aspect of the disclosure, a radar target simulator is provided. Said radar target simulator comprises a primary target generator configured to create at least a part of a radar scene, especially a radar scene, and/or at least one primary radar target, and a secondary target generator configured to create at least one secondary radar target. In this context, the secondary target generator comprises a receive path, a Doppler shifter, a delayer or a delay structure, and a transmit path. Advantageously, a radar under test can be tested in a particularly reliable, efficient, and economic manner. Further advantageously, ghost objects and/or static reflections with the ego speed of the corresponding vehicle can be provided, thereby further increasing reliability.

According to an implementation form of the first aspect of the disclosure, the radar target simulator further comprises at least one transmit-receive pair configured to provide the at least one secondary radar target to a radar under test. Advantageously, for instance, inefficiencies can further be reduced.

According to a further implementation form of the first aspect of the disclosure, the secondary target generator further comprises at least one of an attenuator, an attenuation analog modulator, an attenuation analog modulator with a frequency shift, a Doppler modulator especially for generating a frequency shift, an analog modulator especially for generating a frequency shift, or any combination thereof. Advantageously, for example, flexibility can be increased, which leads to an increased efficiency.

According to a further implementation form of the first aspect of the disclosure, the at least one primary radar target is based on primary radio waves being incident and/or reflected with respect to a radar under test in a direct manner or behaving like this. Advantageously, for instance, the primary target generator can efficiently be configured to generate and/or simulate real objects.

According to a further implementation form of the first aspect of the disclosure, the at least one secondary radar target is based on secondary radio waves being incident and/or reflected with respect to a radar under test in an indirect manner, especially in a multi-path manner, or behaving like this. Advantageously, for example, the secondary target generator can efficiently be configured to generate and/or simulate no real objects or ghost objects, respectively.

According to a further implementation form of the first aspect of the disclosure, the at least one secondary radar target comprises or is at least one ghost radar target. Advantageously, for instance, reliability and efficiency can further be increased.

According to a further implementation form of the first aspect of the disclosure, the secondary target generator is further configured to vary the respective radar cross section, especially with the aid of an attenuator and/or an attenuation analog modulator. Advantageously, for example, complexity can be reduced by using the above-mentioned attenuator and/or attenuation analog modulator.

According to a further implementation form of the first aspect of the disclosure, the receive path and the transmit path of the secondary target generator and/or the secondary target generator are adapted to be connected to multiple receive and transmit antennas and/or with multiple front ends, especially to provide the at least one secondary radar target at different angles. Advantageously, for instance, flexibility, and thus also efficiency, can be increased.

According to a further implementation form of the first aspect of the disclosure, the delayer or the delay structure comprises or is at least one of a delay line, a switchable delay line, a digital delay line, a switchable digital delay line, a coax line, a switchable coax line, a fiber line, a switchable fiber line, a small-form-factor-package module, or any combination thereof. Advantageously, for example, a multi-path behavior can be provided in a particularly efficient and economic manner.

According to a further implementation form of the first aspect of the disclosure, the corresponding delay of the delayer or delay structure is settable. Advantageously, for instance, flexibility can further be increased, thereby reducing inefficiencies.

According to a further implementation form of the first aspect of the disclosure, the secondary target generator further comprises at least one further delayer or at least one further delay structure, especially to provide the at least one secondary radar target at different distances. Advantageously, for example, flexibility, and thus also efficiency, can further be increased.

According to a second aspect of the disclosure, an antenna array is provided. Said antenna array comprises at least two transmit antennas, at least two receive antennas, and a radar target generator configured to create at least one radar target. In this context, the radar target generator comprises a receive path, a Doppler shifter, a delayer or a delay structure, and a transmit path. Advantageously, a radar under test can be tested in a particularly reliable, efficient, and economic manner. Further advantageously, ghost objects and/or static reflections with the ego speed of the corresponding vehicle can be provided, thereby further increasing reliability.

According to an implementation form of the second aspect of the disclosure, at least one transmit-receive pair of the at least two transmit antennas and the at least two receive antennas is configured to provide the at least one radar target to a radar under test. Advantageously, for instance, inefficiencies can further be reduced.

According to a further implementation form of the second aspect of the disclosure, the radar target generator further comprises at least one of an attenuator, an attenuation analog modulator, an attenuation analog modulator with a frequency shift, a Doppler modulator especially for generating a frequency shift, an analog modulator especially for generating a frequency shift, or any combination thereof. Advantageously, for example, flexibility can be increased, which leads to an increased efficiency.

According to a further implementation form of the second aspect of the disclosure, the at least one radar target is based on radio waves being incident and/or reflected with respect to a radar under test in an indirect manner, especially in a multi-path manner, or behaving like this. Advantageously, for example, the radar target generator can efficiently be configured to generate and/or simulate no real objects or ghost objects, respectively.

According to a further implementation form of the second aspect of the disclosure, the at least one radar target comprises or is at least one ghost radar target. Advantageously, for instance, reliability and efficiency can further be increased.

According to a further implementation form of the second aspect of the disclosure, the radar target generator is further configured to vary the respective radar cross section, especially with the aid of an attenuator and/or an attenuation analog modulator. Advantageously, for example, complexity can be reduced by using the above-mentioned attenuator and/or attenuation analog modulator.

According to a further implementation form of the second aspect of the disclosure, the receive path and the transmit path of the radar target generator and/or the radar target generator are adapted to be connected to multiple ones of the at least two transmit antennas and the at least two receive antennas, especially to provide the at least one radar target at different angles. Advantageously, for instance, flexibility, and thus also efficiency, can be increased.

According to a further implementation form of the second aspect of the disclosure, the delayer or delay structure comprises or is at least one of a delay line, a switchable delay line, a digital delay line, a switchable digital delay line, a coax line, a switchable coax line, a fiber line, a switchable fiber line, a small-form-factor-package module, or any combination thereof. In addition to this or as an alternative, the corresponding delay of the delayer or delay structure is settable. Further additionally or further alternatively, the radar target generator further comprises at least one further delayer or at least one further delay structure, especially to provide the at least one radar target at different distances. Advantageously, for example, flexibility can further be increased, thereby reducing inefficiencies.

According to a third aspect of the disclosure, a radar target simulation method is provided. Said radar simulation method comprises the steps of creating, by a primary target generator, at least a part of a radar scene, especially a radar scene, and/or at least one primary radar target, and creating, by a secondary target generator, at least one secondary radar target. In this context, the secondary target generator comprises a receive path, a Doppler shifter, a delayer or a delay structure, and a transmit path. Advantageously, a radar under test can be tested in a particularly reliable, efficient, and economic manner. Further advantageously, ghost objects and/or static reflections with the ego speed of the corresponding vehicle can be provided, thereby further increasing reliability.

### Brief Description of the Drawings

The above-described aspects and implementation forms of the present disclosure will be explained in the following description of specific embodiments in relation to the enclosed drawings, in which:
Fig. 1 shows an exemplary embodiment of the first aspect of the disclosure;
Fig. 2A shows a further exemplary embodiment based on Fig. 1;
Fig. 2B shows her further exemplary embodiment based on Fig. 2A;
Fig. 3 shows an exemplary radar target simulation system comprising the radar target simulator of Fig. 2A;
Fig. 4 shows an exemplary embodiment of the second aspect of the disclosure;
Fig. 5 shows a further exemplary embodiment based on Fig. 4;
Fig. 6 shows an exemplary radar target simulation system comprising the antenna array of Fig. 5; and
Fig. 7 shows a flow chart of an exemplary embodiment of the third aspect of the disclosure.

### Detailed Descriptions of Embodiments

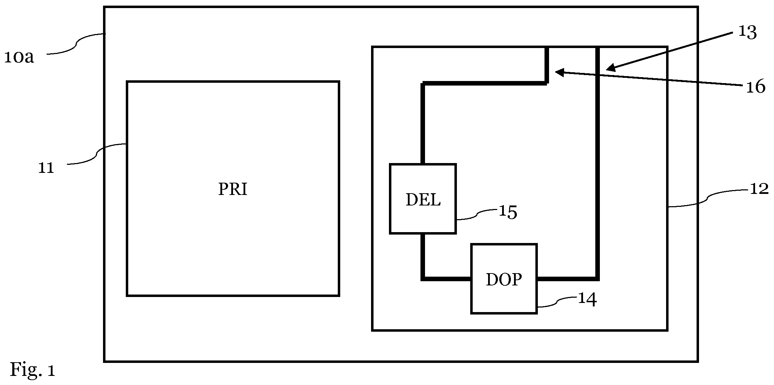

With respect to Fig. 1, an exemplary embodiment of a radar target simulator 10a is depicted. Said radar target simulator 10a comprises a primary target generator 11 configured to create at least a part of a radar scene, especially a radar scene, and/or at least one primary radar target, and a secondary target generator 12 configured to create at least one secondary radar target.

As it can further be seen from Fig. 1, the secondary target generator comprises a receive path 13, a Doppler shifter 14, a delayer or delay structure 15, and a transmit path 16. Exemplarily, said receive path 13 is configured to be connected to a receive antenna or a receive portion of an antenna array or a front end. The receive path 13 is connected to the Doppler shifter 14, especially an input thereof. Said Doppler shifter 14, especially an output thereof, is connected to the delayer or delay structure 15, especially an input thereof. Furthermore, the delayer or delay structure 15, especially an output thereof, is connected to the transmit path 16. Said transmit path 16 is configured to be connected to a transmit antenna or a transmit portion of an antenna array or a front end.

Moreover, it is noted that it might be particularly advantageous if the radar target simulator 10a comprises at least one transmit-receive pair configured to provide the at least one secondary radar target to a radar under test. Exemplarily, it might be particularly advantageous if the transmit path 16 and the receive path 13 form a transmit-receive pair. Said at least one transmit-receive pair or said transmit-receive pair, respectively, may be configured to be connected to a transmit-receive antenna pair or a transmit-receiver pair portion of an antenna array or a front end.

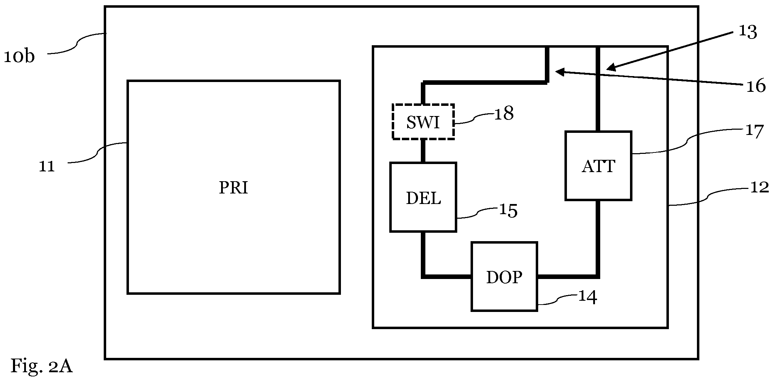

Now, with respect to Fig. 2A, a further exemplary embodiment of a radar target simulator 10b is illustrated, which is based on the above-mentioned radar target simulator 10a according to Fig. 1. Accordingly, analogous elements of the radar target simulator 10b are not explained again but equipped with the same reference signs as the corresponding elements of Fig. 1. All the explanations above can analogously apply for Fig. 2A, and vice versa.

The radar target simulator 10b differs from the radar target simulator 10a especially in that the secondary target generator 12 further comprises at least one of an attenuator, an attenuation analog modulator, an attenuation analog modulator with a frequency shift, a Doppler modulator especially for generating a frequency shift, an analog modulator especially for generating a frequency shift, or any combination thereof. Exemplarily, the secondary target generator 12 comprises an adjustable attenuator 17. Furthermore, as a further difference to Fig. 1, the secondary target generator 12 may especially comprise a switch 18 in the transmit path 16, preferably for enabling or disabling the corresponding provision of the at least one secondary radar target for a radar under test.

Exemplarily, as it can further be seen from Fig. 2A, the receive path 13 is connected to the adjustable attenuator 17, especially an input thereof. Said adjustable attenuator 17, especially an output thereof, is connected to the Doppler shifter 14, especially an input thereof. The Doppler shifter 14, especially an output thereof, is connected to the delayer or delay structure 15, especially an input thereof. Furthermore, the delayer or delay structure 15, especially an output thereof, is connected to the transmit path 16 via the switch 18.

With respect to the above-mentioned at least one primary radar target, it is noted that it might be particularly advantageous if the at least one primary radar target is based on primary radio waves being incident and/or reflected with respect to a radar under test in a direct manner or behaving like this. It is further noted that it might be particularly advantageous if the primary target generator 11 is configured to generate and/or simulate real objects.

With respect to the above-mentioned at least one secondary radar target, it is noted that it might be particularly advantageous if the at least one secondary radar target is based on secondary radio waves being incident and/or reflected with respect to a radar under test in an indirect manner, especially in a multi-path manner, or behaving like this. It is further noted that it might be particularly advantageous if the secondary target generator 12 is configured to generate and/or simulate no real objects or ghost objects, respectively. Accordingly, it might be particularly advantageous if the at least one secondary radar target comprises or is at least one ghost radar target.

Moreover, it is noted that it might be particularly advantageous if the secondary target generator 12 is further configured to vary the respective radar cross section, especially with the aid of an attenuator and/or an attenuation analog modulator such as the above-mentioned adjustable attenuator 17.

Again, with respect to the above-mentioned receive path 13 and the transmit path 16, it is noted that it might be particularly advantageous if the receive path 13 and the transmit path 16 of the secondary target generator 12 and/or the secondary target generator 12 are adapted to be connected to multiple receive and transmit antennas and/or with multiple front ends, preferably in parallel, especially to provide the at least one secondary radar target at different angles.

With respect to the above-mentioned delay of 15, it is noted that it might be particularly advantageous if the delayer or delay structure 15 comprises or is at least one of a delay line, a switchable delay line, a digital delay line, a switchable digital delay line, a coax line, a switchable coax line, a fiber line, a switchable fiber line, a small-form-factor-package module, or any combination thereof. Advantageously, the secondary target generator 12 can be configured to provide multipath by taking a target and adding a delay, especially by taking an existing target from the primary target generator 11 and adding an additional delay. Further advantageously, the corresponding delay of the delayer or delay structure 15 can be settable.

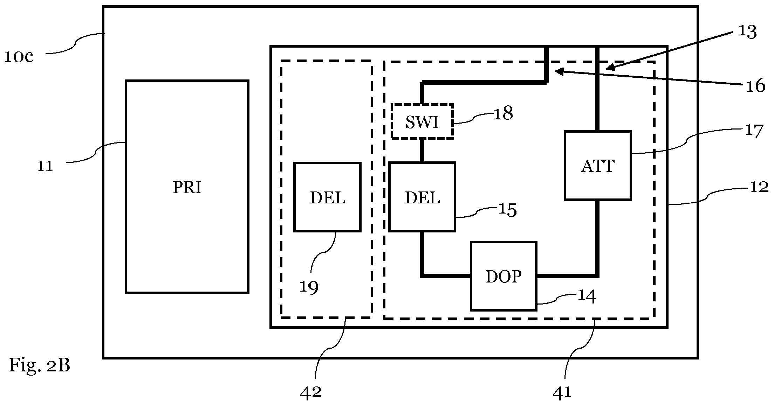

Now, with respect to Fig. 2B, a further exemplary embodiment of a radar target simulator 10c is illustrated, which is based on the above-mentioned radar target simulator 10b according to Fig. 2A. Accordingly, analogous elements of the radar target simulator 10c are not explained again but equipped with the same reference signs as the corresponding elements of Fig. 2A. All the explanations above can analogously apply for Fig. 2B, and vice versa.

The exemplary embodiment of the radar target simulator 10c of Fig. 2B especially differs from the one according to Fig. 2A in that the secondary target generator 12 further comprises at least one further delayer or further delay structure 19, preferably in a corresponding at least one further channel 42, especially to provide the at least one secondary radar target at different distances.

In this exemplary case according to Fig. 2B, it can be seen that the secondary target generator 12 may comprise a channel 41 comprising the above-mentioned receive path 13, the adjustable attenuator of 17, the Doppler shifter 14, the delayer or delay structure 15, the transmit path 16, and especially the switch 18.

In this context, it is noted that it might be particularly advantageous if the at least one further channel, such as the further channel 42, analogously comprises at least a part or each of the elements of the channel 41. Accordingly, it is further noted that it might be particularly advantageous if at least a part or each of the at least one further channel, such as the further channel 42, is implemented as the channel 41.

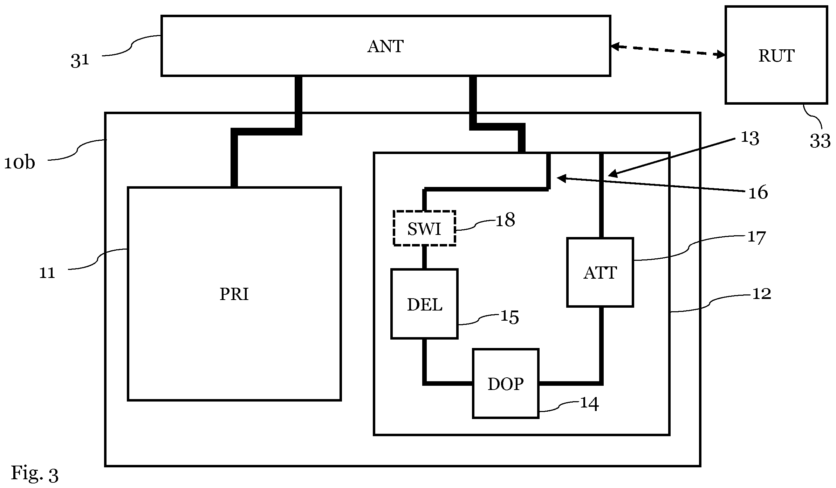

Moreover, Fig. 3 shows an exemplary radar target simulation system comprising the above-mentioned radar target simulator 10b, an antenna array 31, and a radar under test 33. Exemplarily, the radar target simulator 10b, especially the primary target generator 11 and the secondary target generator 12, is connected to the antenna array 31. Further exemplarily, the antenna array 31 is in communication with the radar under test 33. For the sake of completeness, it is noted that the radar target simulator 10b of the radar target simulation system can exemplarily be replaced by the above-mentioned radar target simulator 10a or 10c, respectively.

With respect to the above-mentioned radar target simulation system, it is noted that it might be particularly advantageous if the radar target simulation system is used for or in the context of hardware-in-the-loop testing or vehicle-in-the-loop testing. It is further noted that this can analogously apply for the above-mentioned radar target simulator 10a, 10b, 10c or the antenna array described in the following, respectively.

With respect to the above-mentioned radar under test 33, it is noted that the radar under test 33 may comprise or be a radar sensor. Preferably for creating a realistic environment for the radar under test 33 or the radar sensor, respectively, especially in the context of hardware-in-the-loop testing or vehicle-in-the-loop testing, it might be particularly advantageous if the radar target simulator 10a, 10b, 10c or the radar target simulation system, respectively, especially the secondary target generator 12, is configured to provide ghost objects and/or static reflections with the ego speed of the corresponding vehicle.

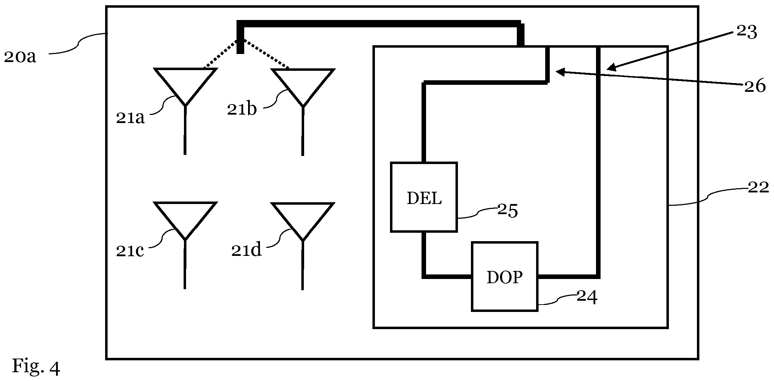

Furthermore, Fig. 4 illustrates an exemplary embodiment of an antenna array 20a. Said antenna array comprises at least two transmit antennas, exemplarily the transmit antennas 21a, 21c, at least two receive antennas, exemplarily the receive antennas 21b, 21d, and a radar target generator 22 configured to create at least one radar target. In this context, the radar target generator 22 comprises a receive path 23, a Doppler shifter 24, a delayer or delay structure 25, and a transmit path 26.

Exemplarily, the receive path 23 is connected to the Doppler shifter 24, especially an input thereof. Said Doppler shifter 24, especially an output thereof, is connected to the delayer or delay structure 25, especially an input thereof. Furthermore, the delayer or delay structure 25, especially an output thereof, is connected to the transmit path 26.

It is noted that the explanations above regarding the secondary target generator 12 can analogously apply for the radar target generator 22, and vice versa. Accordingly, the explanations above regarding the receive path 13, the Doppler shifter 14, the delayer or delay structure 15, and the transmit path 16 can analogously apply for the corresponding elements of the radar target generator 22, and vice versa.

It is further noted that it might be particularly advantageous if at least one transmit-receive pair of the at least two transmit antennas and the at least two receive antennas is configured to provide the at least one radar target to a radar under test. Exemplarily, a transmit-receive pair is formed by the transmit antenna 21a and the receive antenna 21b. Accordingly, the receive path 23 may especially be connected to the receive antenna 21b, and the transmit path 26 may especially be connected to the transmit antenna 21a.

It might be particularly advantageous if at least a part or each of the remaining transmit antennas and receive antennas, which are not used for providing the at least one radar target to a radar under test, is configured to be connected to a radar target simulator. Exemplarily, the transmit antenna 21c and the receive antenna 21d may be configured to be connected to a radar target simulator.

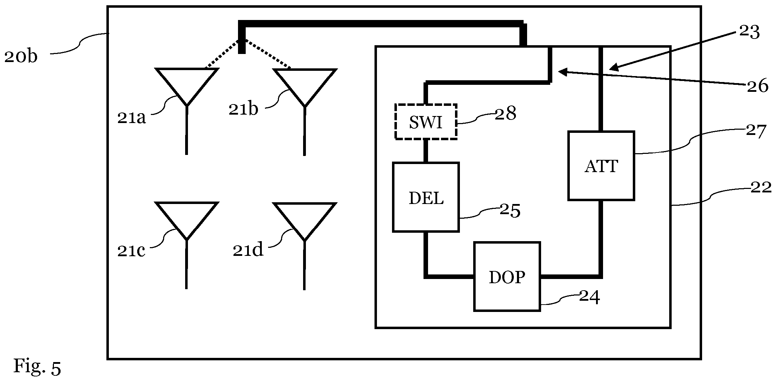

Now, with respect to Fig. 5, a further exemplary embodiment of an antenna array 20b is illustrated, which is based on the above-mentioned antenna array 20a according to Fig. 4. Accordingly, analogous elements of the antenna array 20b are not explained again but equipped with the same reference signs as the corresponding elements of Fig. 4. All the explanations above can analogously apply for Fig. 5, and vice versa.

The antenna array 20b differs from the antenna array 20a especially in that the radar target generator 22 further comprises at least one of an attenuator, an attenuation analog modulator, an attenuation analog modulator with a frequency shift, a Doppler modulator especially for generating a frequency shift, an analog modulator especially for generating a frequency shift, or any combination thereof. Exemplarily, the radar target generator 22 comprises an adjustable attenuator 27. Furthermore, as a further difference to Fig. 4, the radar target generator 22 may especially comprise a switch 28 in the transmit path 26, preferably for enabling or disabling the corresponding provision of the at least one radar target for a radar under test.

It is noted that the explanations above regarding the adjustable attenuator 27 and the switch 28 can analogously apply for the corresponding elements of the radar target generator 22, and vice versa.

Exemplarily, as it can further be seen from Fig. 5, the receive path 23 is connected to the adjustable attenuator 27, especially an input thereof. Said adjustable attenuator 27, especially an output thereof, is connected to the Doppler shifter 24, especially an input thereof. The Doppler shifter 24, especially an output thereof, is connected to the delayer or delay structure 25, especially an input thereof. Furthermore, the delayer or delay structure 25, especially an output thereof, is connected to the transmit path 26 via the switch 28.

With respect to the above-mentioned at least one radar target, it is noted that it might be particularly advantageous if the at least one radar target is based on radio waves being incident and/or reflected with respect to a radar under test in an indirect manner, especially in a multi-path manner, or behaving like this. It is further noted that it might be particularly advantageous if the radar target generator 22 is configured to generate and/or simulate no real objects or ghost objects, respectively. Accordingly, it might be particularly advantageous if the at least one radar target comprises or is at least one ghost radar target.

Moreover, it is noted that it might be particularly advantageous if the radar target generator 22 is further configured to vary the respective radar cross section, especially with the aid of an attenuator and/or an attenuation analog modulator such as the above-mentioned adjustable attenuator 27.

It is further noted that it might be particularly advantageous if the receive path 23 and the transmit path 26 of the radar target generator 22 and/or the radar target generator 22 are adapted to be connected to multiple ones of the at least two transmit antennas and the at least two receive antennas, preferably in parallel, especially to provide the at least one radar target at different angles.

For instance, the receive path 23 may be connected to the receive antennas 21b, 21d in parallel, and the transmit path 26 may be connected to the transmit antennas 21a, 21c in parallel, especially to provide the at least one radar target at different angles. Accordingly, in such an example, it might be particularly advantageous if the antenna array 20b comprises at least one further transmit antenna configured to be connected to a radar target simulator and at least one further receive antenna configured to be connected to a or said radar target simulator.

With respect to the above-mentioned delayer or delay structure 25, it is noted that it might be particularly advantageous if the delayer or delay structure 25 comprises or is at least one of a delay line, a switchable delay line, a digital delay line, a switchable digital delay line, a coax line, a switchable coax line, a fiber line, a switchable fiber line, a small-form-factor-package module, or any combination thereof. Further advantageously, the corresponding delay of the delayer or delay structure 25 may especially be settable.

It is further noted that it might be particularly advantageous if the radar target generator 22 further comprises at least one further delayer or further delay structure, preferably in a corresponding at least one further channel, especially to provide the at least one radar target at different distances. With respect to said at least one further delayer or delay structure or the at least one further channel, respectively, the explanations above regarding the exemplary further delayer or delay structure 19 or the exemplary further channel 42, respectively, according to Fig. 2B can analogously apply, and vice versa.

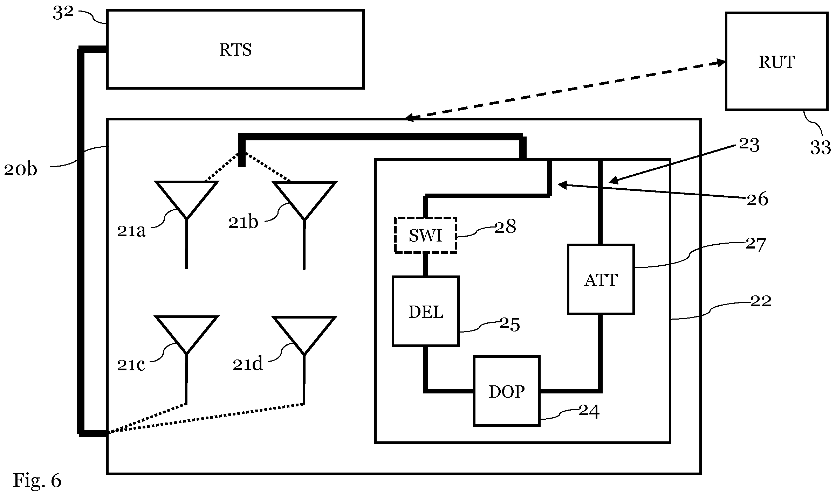

Moreover, Fig. 6 shows an exemplary radar target simulation system comprising the above-mentioned antenna array 20b, a radar target simulator 32, and a radar under test 33. Exemplarily, the radar target simulator 32 is connected to the antenna array 20b. In particular, the radar target simulator 32 is exemplarily connected to the transmit antenna 21c and the receive antenna 21d. Further exemplarily, the antenna array 20b is in communication with the radar under test 33. For the sake of completeness, it is noted that the antenna array 20b of the radar target simulation system can exemplarily be replaced by the above-mentioned antenna array 20a.

With respect to the above-mentioned radar target simulation system, it is noted that it might be particularly advantageous if the radar target simulation system is used for or in the context of hardware-in-the-loop testing or vehicle-in-the-loop testing. It is further noted that this can analogously apply for the above-mentioned antenna array 20a or 20b, respectively.

With respect to the above-mentioned radar under test 33, it is noted that the radar under test 33 may comprise or be a radar sensor. Preferably for creating a realistic environment for the radar under test 33 or the radar sensor, respectively, especially in the context of hardware-in-the-loop testing or vehicle-in-the-loop testing, it might be particularly advantageous if the antenna array 20a, 20b or the radar target simulation system, respectively, especially the radar target generator 22, is configured to provide ghost objects and/or static reflections with the ego speed of the corresponding vehicle.

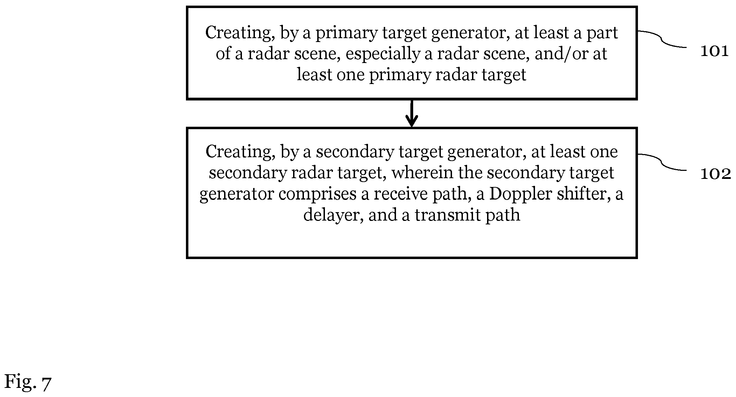

Finally, Fig. 7 illustrates a flow chart of an exemplary embodiment of the radar target simulation method. A first step 101 comprises creating, by a primary target generator such as the above-mentioned primary target generator 11, at least a part of a radar scene, especially a radar scene, and/or at least one primary radar target, Furthermore, a second step 102 comprises creating, by a secondary target generator such as the above-mentioned secondary target generator 12 or the radar target generator 22, respectively, at least one secondary radar target, wherein the secondary target generator comprises a receive path, such as the above-mentioned receive path 13 or 23, respectively, a Doppler shifter, such as the above-mentioned Doppler shifter 14 or 24, respectively, a delayer or delay structure, such as the above-mentioned delayer or delay structure 15 or 25, respectively, and a transmit path, such as the above-mentioned transmit path 16 or 26, respectively.

While various embodiments of the present invention have been described above, it should be understood that they have been presented by way of example only, and not limitation. Numerous changes to the disclosed embodiments can be made in accordance with the disclosure herein without departing from the spirit or scope of the invention. Thus, the breadth and scope of the present invention should not be limited by any of the above-described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of serveral implementations, such feature may be combined with one or more other features of the other implementations as may be desired and advantageous for any given or particular application.

## Claims

1. A radar target simulator comprising:
a primary target generator configured to create at least a part of a radar scene, especially a radar scene, and/or at least one primary radar target, and
a secondary target generator configured to create at least one secondary radar target, wherein the secondary target generator comprises a receive path, a Doppler shifter, a delayer or a delay structure, and a transmit path.

2. The radar target simulator according to claim 1, further comprising:
at least one transmit-receive pair configured to provide the at least one secondary radar target to a radar under test.

3. The radar target simulator according to claim 1 or 2,
wherein the secondary target generator further comprises at least one of an attenuator, an attenuation analog modulator, an attenuation analog modulator with a frequency shift, a Doppler modulator especially for generating a frequency shift, an analog modulator especially for generating a frequency shift, or any combination thereof.

4. The radar target simulator according to any of the preceding claims,
wherein the at least one primary radar target is based on primary radio waves being incident and/or reflected with respect to a radar under test in a direct manner or behaving like this.

5. The radar target simulator according to any of the preceding claims,
wherein the at least one secondary radar target is based on secondary radio waves being incident and/or reflected with respect to a radar under test in an indirect manner, especially in a multi-path manner, or behaving like this.

6. The radar target simulator according to any of the preceding claims,
wherein the at least one secondary radar target comprises or is at least one ghost radar target.

7. The radar target simulator according to any of the preceding claims,
wherein the secondary target generator is further configured to vary the respective radar cross section, especially with the aid of an attenuator and/or an attenuation analog modulator.

8. The radar target simulator according to any of the preceding claims,
wherein the receive path and the transmit path of the secondary target generator and/or the secondary target generator are adapted to be connected to multiple receive and transmit antennas and/or with multiple front ends, especially to provide the at least one secondary radar target at different angles.

9. The radar target simulator according to any of the preceding claims,
wherein the delayer or delay structure comprises or is at least one of a delay line, a switchable delay line, a digital delay line, a switchable digital delay line, a coax line, a switchable coax line, a fiber line, a switchable fiber line, a small-form-factor-package module, or any combination thereof.

10. The radar target simulator according to any of the preceding claims,
wherein the corresponding delay of the delayer or delay structure is settable.

11. The radar target simulator according to any of the preceding claims,
Wherein the secondary target generator further comprises at least one further delayer or at least one further delay structure, especially to provide the at least one secondary radar target at different distances.

12. An antenna array comprising:
at least two transmit antennas,
at least two receive antennas, and
a radar target generator configured to create at least one radar target,
wherein the radar target generator comprises a receive path, a Doppler shifter, a delayer or a delay structure, and a transmit path.

13. The antenna array according to claim 12,
wherein at least one transmit-receive pair of the at least two transmit antennas and the at least two receive antennas is configured to provide the at least one radar target to a radar under test.

14. The antenna array according to claim 12 or 13,
wherein the radar target generator further comprises at least one of an attenuator, an attenuation analog modulator, an attenuation analog modulator with a frequency shift, a Doppler modulator especially for generating a frequency shift, an analog modulator especially for generating a frequency shift, or any combination thereof.

15. The antenna array according to any of claims 12 to 14,
wherein the at least one radar target is based on radio waves being incident and/or reflected with respect to a radar under test in an indirect manner, especially in a multi-path manner, or behaving like this.

16. The antenna array according to any of claims 12 to 15,
wherein the at least one radar target comprises or is at least one ghost radar target.

17. The antenna array according to any of claims 12 to 16,
wherein the radar target generator is further configured to vary the respective radar cross section, especially with the aid of an attenuator and/or an attenuation analog modulator.

18. The antenna array according to any of claims 12 to 17,
wherein the receive path and the transmit path of the radar target generator and/or the radar target generator are adapted to be connected to multiple ones of the at least two transmit antennas and the at least two receive antennas, especially to provide the at least one radar target at different angles.

19. The antenna array according to claim any of claims 12 to 18,
wherein the delayer or delay structure comprises or is at least one of a delay line, a switchable delay line, a digital delay line, a switchable digital delay line, a coax line, a switchable coax line, a fiber line, a switchable fiber line, a small-form-factor-package module, or any combination thereof, and/or wherein the corresponding delay of the delayer or delay structure is settable, and/or wherein the radar target generator further comprises at least one further delayer or at least one further delay structure, especially to provide the at least one radar target at different distances.

20. A radar target simulation method comprising the steps of:
creating, by a primary target generator, at least a part of a radar scene, especially a radar scene, and/or at least one primary radar target, and
creating, by a secondary target generator, at least one secondary radar target,
wherein the secondary target generator comprises a receive path, a Doppler shifter, a delayer or a delay structure, and a transmit path.
